(19) Europäisches Patentamt
European Patent Office
Office européen des brevets

(11) Veröffentlichungsnummer: **0 006 579**
**B1**

(12) # EUROPÄISCHE PATENTSCHRIFT

(45) Veröffentlichungstag der Patentschrift: **09.12.81**

(51) Int. Cl.³: **C 08 G 63/62**, C 08 J 7/10

(21) Anmeldenummer: **79102050.6**

(22) Anmeldetag: **21.06.79**

(54) **Polycarbonate mit UV-Licht-vernetzbaren Doppelbindungen, Verfahren zu ihrer Herstellung, Verfahren zu ihrer Modifizierung sowie die hierbei erhaltenen Produkte.**

(30) Priorität: **04.07.78 DE 2829256**

(43) Veröffentlichungstag der Anmeldung: **09.01.80 Patentblatt 80/1**

(45) Bekanntmachung des Hinweises auf die Patenterteilung: **09.12.81 Patentblatt 81/49**

(84) Benannte Vertragsstaaten: **DE FR GB IT NL**

(56) Entgegenhaltungen:
DE-A-1 930 257
DE-A-2 401 630
DE-A-2 757 086
FR-A-2 350 370

(73) Patentinhaber: **BAYER AG, Zentralbereich Patente, Marken und Lizenzen, D-5090 Leverkusen 1, Bayerwerk (DE)**

(72) Erfinder: **Adelmann, Siegfried, Dr., Bodelschwinghstrasse 18, D-4150 Krefeld (DE)**
Erfinder: **Margotte, Dieter, Dr., Wedelstrasse 48, D-4150 Krefeld (DE)**
Erfinder: **Rosenkranz, Hans Jürgen, Dr., Heinrich-Kauert-Weg 9, D-4150 Krefeld (DE)**
Erfinder: **Vernaleken, Hugo, Dr., Kreuzbergstrasse 147, D-4150 Krefeld (DE)**
Erfinder: **Nouvertné, Werner, Dr., Scheiblerstrasse 95, D-4150 Krefeld (DE)**
Erfinder: **Freitag, Dieter, Dr., Hasenheide 10, D-4150 Krefeld (DE)**

**EP 0 006 579 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Polycarbonate mit UV-Licht-vernetzbaren Doppelbindungen, Verfahren zu ihrer Herstellung, Verfahren zu ihrer Modifizierung sowie die hierbei erhaltenen Produkte.

Gegenstand der vorliegenden Erfindung sind neue hochmolekulare vernetzbare Polycarbonate mit Molekulargewichten $\overline{M}_w$ (Gewichtsmittel) von 10.000 bis 200.000, bevorzugt 20.000 bis 80.000, auf Basis von Diphenolen und monofunktionellen Kettenabbrechern, dadurch gekennzeichnet, dass sie der Formel (I) entsprechen

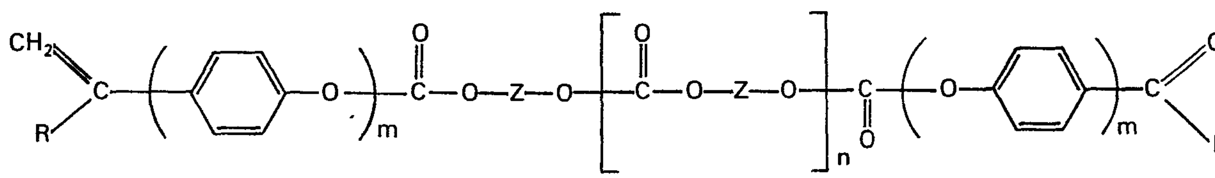

(I),

in der

Z = Rest eines Diphenols,

n = eine ganze Zahl von 20 bis 400

m = 0 oder 1, und

R = H oder $C_1$-$C_3$-Alkyl bedeuten, wobei 0,5 bis 5 Mol % von Z Reste von aromatischen Dihydroxyketonen sind.

Gegenstand der vorliegenden Erfindung ist ausserdem ein Verfahren zur Herstellung neuer hochmolekularer Polycarbonate mit $\overline{M}_w$ von 10.000 bis 200.000, bevorzugt 20.000 bis 80.000, das dadurch gekennzeichnet ist, dass man Diphenole der Formel (II)

HO - Z - OH (II)

worin Z ein zweiwertiger aromatischer Rest ist, der gegebenenfalls Alkyl- oder Halogen-substituiert sein kann, und der vorzugsweise 6 bis 30 C-Atome enthält, und/oder deren Chlorkohlensäureester nach den für die Herstellung von Polycarbonaten üblichen Verfahren in homogener oder heterogener Phase bei Verwendung von 0,05 bis 5 Mol %, vorzugsweise 0,1 bis 4 Mol %, bezogen auf Mole an eingesetzten Struktureinheiten Z, von Verbindungen der Formel (III)

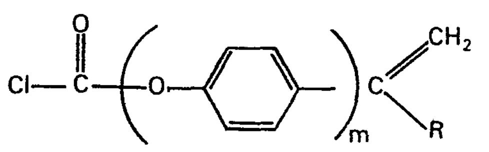

(III),

worin m und R die für Formel (I) angegebene Bedeutung haben, umsetzt, wobei 0,5 bis 5 Mol % der Diphenole der Formel (II) aromatische Dohydroxyketone sind.

Neben den erfindungsgemäss zu verwendenden Kettenabbrechern gemäss Formel (III) können auch alle üblichen für die Polycarbonat-Synthese geeigneten monofunktionellen Phenole mitverwendet werden.

Die erfindungsgemässen vernetzbaren Polycarbonate enthalten in Mengen von 0,5 bis 5 Mol %, bezogen auf Mole an allen eingesetzten Diphenolen der Formel HO-Z-OH (II), aromatische Dihydroxyketone, vorzugsweise solche der folgenden Formeln IIa, IIb und/oder IIc einkondensiert.

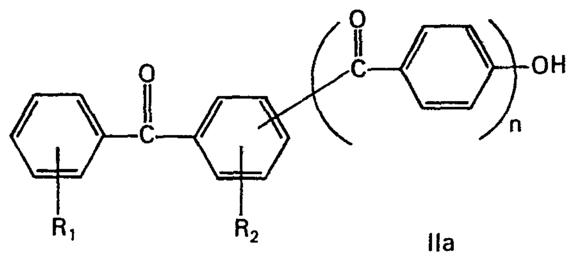

IIa

In IIa sind $R_1$ oder $R_2$ OH, n null oder 1 und können $R_1$ und $R_2$ entweder OH oder H sein.

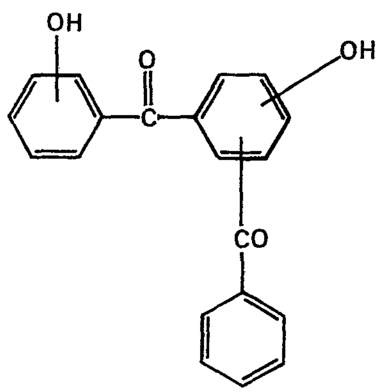

(IIb)

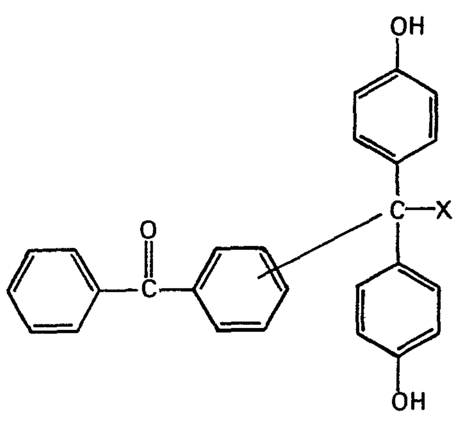

(IIc)

In IIc kann X ein $C_1$-$C_6$-Alkyl oder Phenyl sein.

Polycarbonate sind bekannt und haben aufgrund ihrer hervorragenden Eigenschaften auf vielen Anwendungsgebieten Verwendung gefunden. Für spezielle Anwendungen reicht jedoch z. B. die Beständigkeit gegen organische Lösungsmittel und gegen Spannungsrisskorrosion nicht aus.

Die erfindungsgemässen Polycarbonate zeigen im Vergleich zu den üblicherweise nur mit Phenol, p-tert.-Butylphenol oder 2,6-Dimethylphenol abgebrochenen Polycarbonaten keine abweichenden mechanischen oder thermischen Eigenschaften. Sie sind zudem beispielsweise unter Bestrahlung mit UV-Licht, zur Vernetzung geeignet und damit beständig gegen organische Lösungsmittel und unempfindlich gegen Spannungsrissbildung und ermöglichen, gegebenenfalls zusätzlich unter Verwendung von Flammschutzmitteln, die Herstellung von Polycarbonaten mit besonders gutem flammwidrigen Verhalten.

Gegenstand der vorliegenden Erfindung ist somit auch ein Verfahren zur Modifizierung von Polycarbonaten, das dadurch gekennzeichnet ist, dass man die erfindungsgemässen Polycarbonate oder Polycarbonatgemische der Formel (I), gegebenenfalls nach Zusatz von Flammschutzmitteln in Mengen von 0,05 bis 5 Gew.-%, vorzugsweise 0,1 bis 2 Gew.-%, bezogen auf Gewicht Polycarbonat, mit UV-Licht bestrahlt. Gegenstand der vorliegenden Erfindung sind ausserdem modifizierte Polycarbonate, erhältlich nach dem vorstehend genannten Verfahren.

Die zum Kettenabbruch eingesetzten Monomeren sind preiswert, auf dem Markt leicht zugänglich und lassen sich nach den für die Polycarbonat-Herstellung üblichen Verfahren ohne Schwierigkeiten in das Polymer einbauen, so dass unter wirtschaftlichen Bedingungen leicht UV-vernetzbare Polycarbonate hergestellt werden können.

Als Diphenole der Formel (II), die vorzugsweise 6 bis 30 C-Atome enthalten, sind beispielsweise geeignet: Hydrochinon, Resorcin, Dihydroxydiphenyle, Bis- (hydroxyphenyl)-alkane, Bis- (hydroxyphenyl)- cycloalkane, Bis- (hydroxyphenyl)-sulfide, Bis-(hydroxyphenyl)- äther, Bis-(hydroxyphenyl)- sulfoxide, Bis-(hydroxyphenyl)- sulfone, α, α'-Bis-(hydroxyphenyl)- diisopropylbenzole, sowie deren kernalkylierte und kernhalogenierte Verbindungen.

Diese und weitere geeignete Diphenole sind z. B. in den US-Patentschriften 3 028 365, 2 999 835, 3 148 172, 3 271 368, 2 991 273, 3 271 367, 3 280 078, 3 014 891 und 2 999 846, in den deutschen Offenlegungsschriften 1 570 703, 2 063 050, 2 063 052, 2 211 956, 2 211 957, der französischen Patentschrift 1 561 518 und in der Monographie «H. Schnell, Chemistry and Physics of Polycarbonates, Interscience Publishers, New York, 1964, beschrieben.

Bevorzugte Diphenole sind z. B.:

2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan
und 1,1-Bis-(4-hydroxyphenyl)-cyclohexan.

Erfindungsgemäss einsetzbare aromatische Dihydroxyketone sind beispielsweise 4,4'-Dihydroxybenzophenon, 2,4-Dihydroxybenzophenon und 4-(α, α-Bis-(4-hydroxyphenyl)- äthyl-benzophenon.

Erfindungsgemäss geeignete Verbindungen der Formel (III) sind beispielsweise: Acrylsäurechlorid, Methacrylsäurechlorid, Isopropenylphenylchlorkohlensäureester und p-Hydroxystyrolchlorkohlensäureester.

Es können auch beliebige Mischungen der Diphenole der Formel (II) zusammen mit den Dihydroxyketonen (IIa), (IIb) und/oder (IIc) verwendet werden.

Die Polycarbonate können durch den Einbau geringer Mengen, vorzugsweise von Mengen zwischen 0,05 und 2,0 Mol-% (bezogen auf eingebaute Diphenole), an drei- oder mehr als dreifunktionellen Verbindungen, insbesondere solchen mit drei oder mehr als drei phenolischen Hydroxylgruppen verzweigt sein.

Polycarbonate dieser Art sind z. B. in den deutschen Offenlegungsschriften 1 570 533, 1 595 762, 2 116 974, 2 113 347, der britischen Patentschrift 1 079 821, der US-Patentschrift 3 544 514 und in der deutschen Patentanmeldung P 25 00 092.4 (Le A 16 142) beschrieben.

Die Herstellung der erfindungsgemässen Polycarbonate kann im wesentlichen nach folgenden zwei bekannten Verfahren (vergl. H. Schnell, Chemistry and Physics of Polycarbonates, Polymer Rev., Vol. IX, Seite 27 ff., Interscience Publishers) erfolgen, die im folgenden kurz beschrieben werden.

1. Herstellung eines aromatischen Polycarbonats in heterogener Phase (Phasengrenzflächenverfahren)

Hierbei werden die Diphenole der Formel (II) zusammen mit den Dihydroxyketonen (IIa), (IIb) und/oder (IIc) in wässriger alkalischer Phase gelöst. Dazu werden die zur Herstellung der erfindungsgemässen Polycarbonate erforderlichen Kettenregler gemäss Formel (III) in einem organischen Lösungsmittel gelöst oder in Substanz zugegeben. Nach Zugabe eines für Polycarbonat geeigneten Lösungsmittels entsteht ein zweiphasiges Gemisch, in das bei 0 bis 60 °C Phosgen eingeleitet wird. Nach Zugabe eines Katalysators werden hochmolekulare Polycarbonate erhalten. Die Aufarbeitung erfolgt durch Waschen der organischen Phase und anschliessender Abdestillation des Lösungsmittels, z. B. in Ausdampfextrudern bei Temperaturen von 280 bis 330 °C.

Geeignete organische Lösungsmittel für Polycarbonate und für die Verbindungen der Formel (III) sind die für die Polycarbonatsynthese bekannten, wie beispielsweise Methylenchlorid, Chlorbenzol sowie Mischungen daraus.

Geeignete Katalysatoren sind die für die Polycarbonatsynthese bekannten, wie beispielsweise Triäthylamin und Tributylamin.

2. Herstellung eines Polycarbonats in homogener Phase (Pyridinverfahren)

Die Diphenole gemäss der allgemeinen Formel (II) zusammen mit den Dihydroxyketonen (IIa), (IIb) und/oder (IIc) sowie die Kettenregler gemäss der allgemeinen Formel (III) werden in einer organischen Base, wie beispielsweise Pyridin, gelöst. Nach Zugabe von einem für Polycarbonat geeigneten Lösungsmittel wird Phosgen bei Temperaturen zwischen 0 und 60 °C eingeleitet.

Das sich während der Reaktion bildende Pyridinhydrochlorid wird abfiltriert und die organische Phase mit verdünnter HCl und anschliessend mit Wasser neutral gewaschen. Die Aufarbeitung erfolgt ebenfalls wie unter 1) beschrieben, beispielsweise durch Abdampfen des Lösungsmittels in einer Ausdampfschnecke.

Neben dem Pyridin geeignete organische Basen sind beispielsweise Triäthylamin und Tributylamin. Als Lösungsmittel für Polycarbonat können Methylenchlorid und Chlorbenzol sowie Mischungen daraus verwendet werden.

Setzt man neben oder anstelle der Diphenole der Formel (II) deren Chlorkohlensäureester ein, so berechnen sich die notwendigen Mengen an Kettenabbrechern für die Verfahren unter 1) und 2) sinngemäss aus den Struktureinheiten Z, resultierend aus der Summe aller eingesetzten Diphenole einschliesslich der Dihydroxyketone und deren Chlorkohlensäureester.

Die für die Modifizierung der erfindungsgemässen Polycarbonate erforderliche UV-Bestrahlung erfolgt mit UV-Licht unter Verwendung von handelsüblichen UV-Strahlern, beispielsweise Philips HTQ 4 oder 7, Hanovia-Strahlern und anderen. Quellen anderer energiereicher Strahlen, z. B. Elektronenstrahlen sind ebenfalls verwendbar. Die Bestrahlungsdauer liegt je nach Gehalt an eingesetzten Photoinitiatoren und je nach Probenbeschaffenheit bei 20 bis 180 Sekunden.

Die für die Modifizierung der erfindungsgemässen Polycarbonate geeigneten Flammschutzmittel sind beispielsweise die für die Flammfestmachung von Polycarbonaten bekannten und geeigneten Verbindungen und synergistisch wirkenden Substanzen, wie sie in den DT-OS 1 930 257 (Le A 12 278), DT-OS 2 049 358 (Le A 13 263), DT-OS 2 112 987 (Le A 13 619), DT-OS 2 253 072 (Le A 14 723) und anderen Literaturstellen beschrieben sind.

Geeignet sind z. B. Alkalisalze, insbesondere die in Polycarbonat löslichen, wie z. B. Kaliumisooctanat, Natriumisooctanat, Lithiumisooctanat, Kaliumperfluoroctanat, Natriumperfluoroctanat, Lithiumperfluoroctanat, Kaliumsalze der 5-Äthyl-dioxan-1,3-yl-(5)-carbonsäure, Rubidiumisooctanat, Rubidiumperfluoroctanat, und die Alkalisalze der Perfluoralkansulfonsäure, wie Kaliumperfluormethansulfonat, Kaliumperfluoroctansulfonat und Kaliumperfluorbutansulfonat. Des weiteren können Alkalisalze der Laurinsäure, Stearinsäure, Ölsäure, des Phthalsäuremonobenzylesters, des Adipinsäuremonobutylesters, der p-Octylbenzoesäure, p-tert.-Butylbenzoesäure, der 3-(3,5-di-tert.- Butyl-4-hydroxyphenyl)-propionsäure und des Diglykolsäuremonodecylesters verwendet werden.

Die Einarbeitung der Flammschutzmittel in die erfindungsgemässen Polycarbonate sowie die Formgebung der vernetzbaren Polycarbonate erfolgt vor deren Bestrahlung.

Die Bestrahlung der erfindungsgemässen Polycarbonate kann sowohl an Filmen, Platten als auch an Granulat oder anderen Formkörpern erfolgen.

Die erfindungsgemäss erhältlichen modifizierten Polycarbonat-Formmassen sind gegenüber organischen Lösungsmitteln beständig und zeichnen sich gegenüber herkömmlichen Polycarbonaten durch eine verbesserte Spannungsrisskorrosionsbeständigkeit aus. Sofern ihnen zudem Flammschutzmittel zugesetzt wurden, erhält man schon bei geringen Zusätzen Produkte, die nach UL Subj. 94 mit VO beurteilt werden.

Die erfindungsgemäss erhältlichen modifizierten Polycarbonate können als Folien und Formkörper überall dort eingesetzt werden, wo hohe Beständigkeit gegen organische Lösungsmittel bei hoher Spannungsrisskorrosionsbeständigkeit gefordert wird.

Die folgenden Beispiele sollen den Erfindungsgegenstand näher erläutern. Die angegebenen relativen Viskositäten wurden in Methylenchlorid bei 25 °C und einer Konzentration von 5 g/l gemessen.

Beispiel 1 (Vergleichsbeispiel)

Ca. 454 Teile 4,4'-Dihydroxydiphenyl-2,2-propan und 9,5 Teile p-tert.-Butylphenol werden in 1,5 l Wasser suspendiert. In einem 3-Halskolben, ausgestattet mit Rührer und Gaseinleitungsrohr, wird der Sauerstoff aus der Reaktionsmischung entfernt, indem unter Rühren 15 Min. lang Stickstoff durch die Reaktionsmischung geleitet wird. Dann werden 355 Teile 45%iger Natronlauge und 1000 Teile Methylenchlorid zugegeben. Die Mischung wird auf 25 °C abgekühlt. Unter Aufrechterhaltung dieser Temperatur durch Kühlen werden 237 Teile Phosgen während einer Zeitdauer von 120 Min. zugegeben.

Eine zusätzliche Menge von 75 Teilen einer 45%igen Natronlauge wird nach 15–30 Min. zugegeben, bzw. nachdem die Phosgenaufnahme begonnen hat. Zu der entstandenen Lösung werden 1,6 Teile Triäthylamin zugegeben und die Mischung weitere 15 Min. gerührt. Eine hochviskose Lösung wird erhalten, deren Viskosität durch Zugabe von Methylenchlorid reguliert wird. Die wässrige Phase wird abgetrennt. Die organische Phase wird mit Wasser salz- und alkalifrei gewaschen. Das Polycarbonat wird aus der gewaschenen Lösung isoliert und getrocknet. Das Polycarbonat hat eine relative Viskosität von 1,29–1,30.

Beispiel 2

2778 g (12,2 Mol) 4,4'-Dihydroxydiphenyl-2,2-propan und 39,6 g (0,2 Mol) 4,4'-Dihydroxybenzophenon werden in 19 l Wasser suspendiert.

In einem Kessel, ausgestattet mit Rührer und Gaseinleitungsrohr, wird der Sauerstoff aus der Reaktionsmischung entfernt, indem unter Rühren 15 Min. lang Stickstoff durch die Reaktionsmischung geleitet wird. Dann werden 2347 g (26,4 Mol) 45%ige Natronlauge und 27,4 l Methylenchlorid zugegeben. Die Mischung wird auf 25°C abgekühlt und 33 g (0,32 Mol) Methacrylsäurechlorid, in 0,5 l Methylenchlorid gelöst, zugefügt. Unter Aufrechterhaltung dieser Temperatur durch Kühlen werden 1544 g (15,6 Mol) Phosgen während der Zeitdauer von 120 Min. zugegeben. Eine zusätzliche Menge von 1260 g (14,2 Mol) 45%ige Natronlauge und 7,5 l Wasser wird nach 15 Min. zugegeben, bzw. nachdem die Phosgenaufnahme begonnen hat. Zu der entstandenen Lösung werden 9 ml konzentriertes Triäthylamin zugegeben und die Mischung weitere 15 Min. gerührt.

Es wird eine hochviskose Lösung erhalten, deren Viskosität durch Zugabe von Methylenchlorid reguliert wird. Die wässrige Phase wird abgetrennt.

Die organische Phase wird mit Wasser salz- und alkalifrei gewaschen. Das Polycarbonat wird aus der gewaschenen Lösung isoliert und getrocknet. Das Polycarbonat hat eine relative Viskosität von 1,310.

Beispiel 3

Nach dem in Beispiel 2 angegebenen Verfahren wird ein Polycarbonat aus 2,212 kg (9,7 Mol) 4,4'-Dihydroxyphenyl- 2,2-propan, 97 g (0,25 Mol) 4-(α, α-Bis-(4-hydroxyphenyl))- äthylbenzophenon und 30 g (0,3 Mol) Methacrylsäurechlorid mit einer relativen Viskosität von 1,295 hergestellt.

Die Polycarbonate aus den Beispielen 1 bis 3 werden in Methylenchlorid gelöst und zu 100 µm starken Filmen verarbeitet und bei 120°C über Nacht getrocknet. Anschliessend werden die Filme 45 und 180 Sekunden beidseitig im Abstand von 15 cm mit einem UV-Strahler Philips HTQ 4 (Quecksilberdampfhochdruckbrenner) bestrahlt. Die Filme werden mit Methylenchlorid behandelt und die vernetzten Anteile als unlösliche Fibrillen bzw. Filmstücke abfiltriert und nach Trocknung gravimetrisch bestimmt. Als Folge der unterschiedlichen Vernetzung der Polycarbonate der Beispiele 1 bis 3 unterliegen die Filme unterschiedlicher Spannungsrisskorrosion.

Zur Messung werden 1 cm breite, 100 µm dicke Filmstreifen zu einer Schlaufe mit einem Radius von 3 cm gebogen und in Tetrachlorkohlenstoff getaucht. Die Zeit bis zum Zerspringen der Filmschlaufen infolge auftretender Spannungsrisse wird gestoppt. Die Ergebnisse sind in der Tabelle I zusammengefasst.

Tabelle I

| | Belichtungszeit sec. | unlöslicher Anteil Gew.-% | Beständigkeit in Tetrachlorkohlenstoff sec. |
|---|---|---|---|
| Beispiel 1 (Vergleichsbeispiel) | 180 | – | 1 |
| Beispiel 2 | 45 | 32 | 120 |
| | 180 | 75 | 180+ |
| Beispiel 3 | 45 | 35 | 130 |
| | 180 | 70 | 180+ |

+) nach 180 sec. wurde der Test abgebrochen

Beispiel 4 (Vergleichsbeispiel)

4996 g des Polycarbonats aus Beispiel 1 werden zusammen mit 4 g (0,1 Gew.-%) Kaliumperfluorbutansulfonat in einer Doppelwellenschnecke bei 300°C vermischt und granuliert.

Beispiel 5

4996 g des Polycarbonats aus Beispiel 2 werden zusammen mit 4 g (0,1 Gew.-%) Kaliumperfluorbutansulfonat in einer Doppelwellenschnecke bei 300°C vermischt und granuliert.

Beispiel 6

4996 g des Polycarbonats aus Beispiel 3 werden zusammen mit 4 g (0,1 Gew.-%) Kaliumperfluorbutansulfonat in einer Doppelwellenschnecke bei 300°C vermischt und granuliert.

Die modifizierten Polycarbonate aus den Beispielen 4, 5 und 6 werden zu Normprüfstäben verspritzt und 45 sec. mit einem Philips HTQ 4 Quecksilberdampfhochdruckbrenner im Abstand von 15 cm beidseitig belichtet. Die gefundenen Brandeinstufungen sind in der Tabelle 2 zusammengefasst.

Tabelle 2

| Brandverhalten nach | UL Subj. 94 1/8" | 1/16" |
|---|---|---|
| Beispiel 4 (Vergleichsbeispiel) | V2 | V2 |
| Beispiel 5 | V0 | V0 |
| Beispiel 6 | V0 | V0 |

## Patentansprüche

1. Hochmolekulare aromatische Polycarbonate mit Molekulargewichten $\overline{M}_w$ (Gewichtsmittel) von 10.000 bis 200.000, auf Basis von Diphenolen und monofunktionellen Kettenabbrechern, dadurch gekennzeichnet, dass sie der Formel (I) entsprechen,

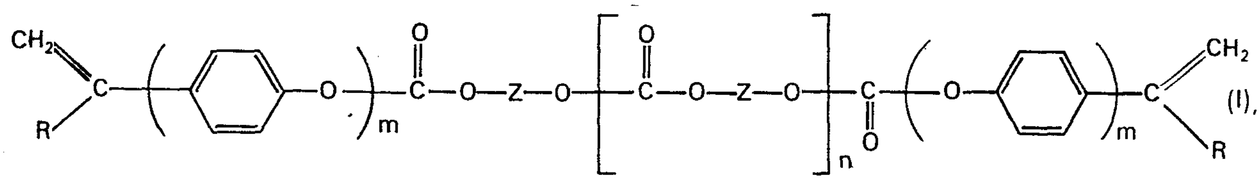

(I),

in der

Z = Rest eines Diphenols,

n = eine ganze Zahl von 20 bis 400,

m = 0 oder 1, und

R = H oder $C_1$-$C_3$-Alkyl bedeuten, wobei 0,5 bis 5 Mol-%, von Z Reste von aromatischen Dihydroxyketonen sind.

2. Verfahren zur Herstellung von Polycarbonaten des Patentanspruchs 1, dadurch gekennzeichnet, dass man Diphenole der Formel (II)

HO - Z - OH (II)

worin Z ein zweiwertiger aromatischer Rest ist, und/oder deren Chlorkohlensäureester nach den für die Herstellung von Polycarbonaten üblichen Verfahren in homogener oder heterogener Phase unter Verwendung von Verbindungen der Formel (III)

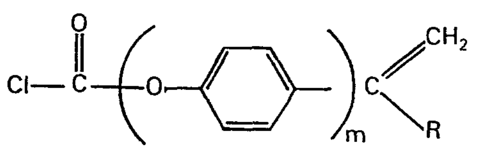

(III),

worin

m = 0 oder 1 und

R = H oder $C_1$-$C_3$-Alkyl bedeuten,

umsetzt, wobei 0,5 bis 5 Mol-% der Diphenole der Formel (II) aromatische Dihydroxyketone sind.

3. Verfahren zur Modifizierung der Polycarbonate des Patentanspruchs 1, dadurch gekennzeichnet, dass man sie mit UV-Licht bestrahlt.

4. Verfahren nach Anspruch 3, dadurch gekennzeichnet, dass man nach Zusatz von Flammschutzmitteln in Mengen von 0,05 bis 5 Gew.-%, bezogen auf Gewicht Polycarbonat, bestrahlt.

5. Verfahren nach Anspruch 4, dadurch gekennzeichnet, dass man nach Zusatz von Flammschutzmitteln in Mengen von 0,1 bis 2 Gew.-%, bezogen auf Gewicht Polycarbonat, bestrahlt.

6. Modifizierte Polycarbonate, erhältlich nach den Verfahren der Ansprüche 3 bis 5.

## Claims

1. High-molecular aromatic polycarbonates having molecular weights $\overline{M}_w$ (weight average) of 10,000 to 200,000 which are based on diphenols and monofunctional chain stoppers, characterised in that they correspond to the formula (I)

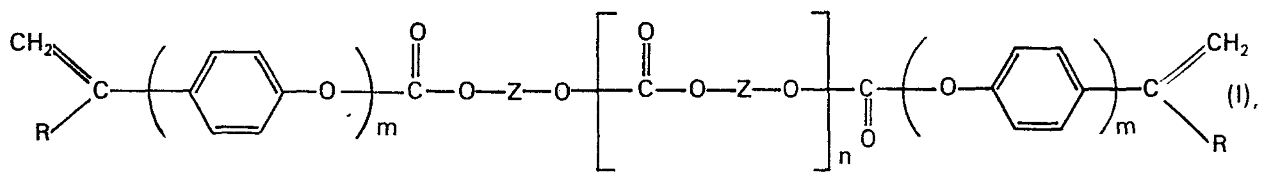

(I),

in which

Z denotes the radical of a diphenol,

n denotes an integer from 20 to 400,

m denotes 0 or 1 and

R denotes H or $C_1$-$C_3$-alkyl,

0.5 to 5 mol % of Z being radicals of aromatic dihydroxyketones.

2. Process for the preparation of the polycarbonates of Patent Claim 1, characterised in that diphenols of the formula (II)

HO - Z - OH (II)

wherein

Z is a divalent aromatic radical,
and/or their chlorocarbonic acid esters are reacted in accordance with the processes which are customary for the preparation of polycarbonates, in a homogeneous or heterogeneous phase system, using compounds of the formula (III)

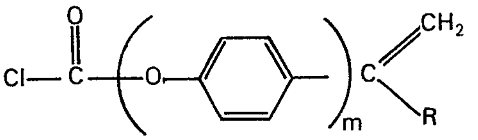 (III),

wherein

m denotes 0 or 1 and

R denotes H or $C_1$-$C_3$-alkyl,

0.5 to 5 mol % of the diphenols of the formula (II) being aromatic dihydroxyketones.

3. Process for the modification of the polycarbonates of Patent Claim 1, characterised in that the polycarbonates are irradiated with UV light.

4. Process according to Claim 3, characterised in that the polycarbonates are irradiated, after adding flameproofing agents in amounts of 0.05 to 5% by weight, relative to the weight of polycarbonate.

5. Process according to Claim 4, characterised in that the polycarbonates are irradiated, after adding flameproofing agents in amounts of 0.1 to 2% by weight, relative to the weight of polycarbonate.

6. Modified polycarbonates, obtainable by the processes of Claims 3 to 5.

**Revendications**

1. Polycarbonates aromatiques macromoléculaires ayant des poids moléculaires $M_p$ (moyennes en poids) de 10000 à 200000, à base de diphénols et d'agents monofonctionnels de terminaison de chaîne, caractérisés en ce qu'ils correspondent à la formule (I):

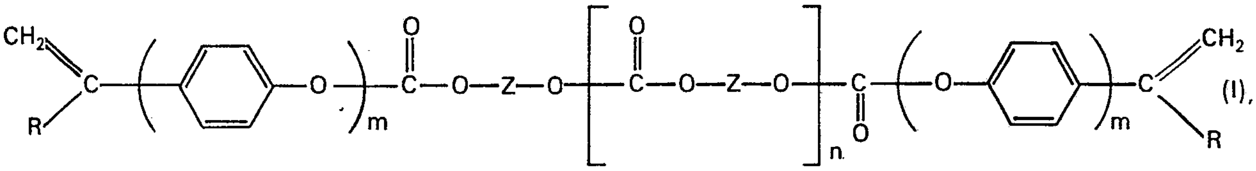 (I),

dans laquelle

Z est le reste d'un diphénol,

n est un nombre entier de 20 à 400,

m est égal à 0 ou 1, et

R représente H ou un radical alkyle en $C_1$-$C_3$,

0,5 à 5 moles % des restes Z étant des restes de dihydroxycétones aromatiques.

2. Procédé de production de polycarbonates suivant la revendication 1, caractérisé en ce qu'on fait réagir des diphénols de formule (II):

$$HO - Z - OH \quad (II)$$

dans laquelle

Z est un reste aromatique divalent et/ou leurs esters d'acide chlorocarbonique, selon les procédés classiques pour la préparation de polycarbonates, en phase homogène ou hétérogène en présence de composés de formule (III):

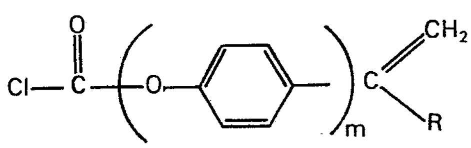 (III),

dans laquelle:

m est égal à 0 ou à 1 et

R représente H ou un groupe alkyle en $C_1$-$C_3$,

0,5 à 5 moles % des diphénols de formule (II) étant des dihydroxycétones aromatiques.

3. Procédé de modification des polycarbonates suivant la revendication 1, caractérisé en ce qu'on les irradie par la lumière ultraviolette.

4. Procédé suivant la revendication 3, caractérisé en ce qu'on effectue l'irradiation après addition de retardateurs de flamme en quantités de 0,05 à 5% en poids, par rapport au poids de polycarbonate.

5. Procédé suivant la revendication 4, caractérisé en ce qu'on effectue l'irradiation après l'addition de retardateurs de flamme en quantités de 0,1 à 2% en poids, par rapport au poids de polycarbonate.

6. Des polycarbonates modifiés pouvant être obtenus par le procédé suivant les revendications 3 à 5.